# EUROPÄISCHE PATENTSCHRIFT

(11) **EP 2 897 467 B1**
(45) Veröffentlichungstag und Bekanntmachung des Hinweises auf die Patenterteilung: **19.10.2016**
(21) Anmeldenummer: 12783562.7
(22) Anmeldetag: 30.10.2012
(51) Int. Cl.: A23G 4/02, A23G 4/04

(54) **VERFAHREN UND VORRICHTUNG ZUM HERSTELLEN STREIFENFÖRMIGER GEGENSTÄNDE, INSBESONDERE KAUGUMMISTREIFEN**
METHOD AND DEVICE FOR PRODUCING STRIP-SHAPED OBJECTS, IN PARTICULAR STICKS OF CHEWING GUM
PROCÉDÉ ET DISPOSITIF POUR FABRIQUER DES ARTICLES EN FORME DE BANDE, NOTAMMENT DES BANDES DE GOMME À MÂCHER

(43) Veröffentlichungstag der Anmeldung: 29.07.2015
(73) Patentinhaber: Loesch Verpackungstechnik GmbH, 96146 Altendorf (DE)
(72) Erfinder: BACKES, Alexander, 90522 Oberasbach (DE); BEHRENS, Andreas, 96050 Bamberg (DE)
(74) Vertreter: Prüfer & Partner mbB Patentanwälte · Rechtsanwälte
(86) Internationale Anmeldenummer: PCT/EP2012/071474
(87) Internationale Veröffentlichungsnummer: WO 2014/067559

(56) Entgegenhaltungen:
- DE-A1-102010 022 629
- US-A- 4 023 723

## Beschreibung

Die Erfindung betrifft ein Verfahren und eine Vorrichtung zum Herstellen einzelner streifenförmiger Gegenstände, insbesondere zum Verzehr geeigneter Gegenstände, insbesondere Kaugummistreifen.

Das erfindungsgemäße Verfahren und die erfindungsgemäße Vorrichtung zum Herstellen streifenförmiger Gegenstände sind beispielsweise Bestandteil eines Verfahrens und einer Vorrichtung zum Verpacken der hergestellten streifenförmigen Gegenstände. Die streifenförmigen Gegenstände können beispielsweise Kaugummistreifen sein. In diesem Fall handelt es sich hierbei insbesondere um Kaugummiverpackungsmaschinen.

Im Stand der Technik sind Verfahren und Vorrichtungen zum Herstellen von streifenförmigen Gegenständen, insbesondere von Kaugummistreifen bzw. Streifenkaugummis, sowie Verfahren und Vorrichtungen zum Verpacken derartiger streifenförmiger Gegenstände bekannt, insbesondere Kaugummiverpackungsmaschinen. Ein Verfahren sowie eine Vorrichtung zum Herstellen und zum Verpacken einzelner streifenförmiger Gegenstände, insbesondere Kaugummistreifen, ist beispielsweise in der Patentanmeldung PCT/EP2012/057145 der Anmelderin beschrieben. Für die Grundlagen der vorliegenden Erfindung wird auf diese Patentanmeldung Bezug genommen.

Sofern nachfolgend von Kaugummis oder Kaugummistreifen bzw. Streifenkaugummis die Rede ist, ist dieses lediglich exemplarisch zu verstehen. Die vorliegende Erfindung bezieht sich neben Kaugummis auf jegliche Art von streifenförmigen Gegenständen, also Gegenstände, die einerseits zum menschlichen Verzehr geeignet sind (z.B. Gebäck- oder Süßwarenprodukte) oder die andererseits nicht zum Verzehr bestimmt sind (z.B. medizinische oder pharmazeutische Produkte).

Bei den aus der oben genannten Patentanmeldung bekannten sowie anderen bekannten Verfahren und Vorrichtungen zum Herstellen streifenförmiger Gegenstände werden üblicherweise zunächst größere, im wesentlichen rechteckige Platten bereitgestellt, aus denen die streifenförmigen Gegenstände zu bilden sind. Dabei entspricht die Länge der kürzeren Seite der rechteckigen Platten im Wesentlichen der Länge eines einzelnen der zu bildenden streifenförmigen Gegenstände. Die bereitgestellten Platten weisen typischerweise mehrere parallel zueinander und im Wesentlichen parallel zu den kürzeren Seite der rechteckigen Platten verlaufende, unter gleichen Abständen voneinander angeordnete Rillen auf, wobei der Abstand zwischen jeweils zwei benachbarten Rillen im Wesentlichen der Breite des zu bildenden Streifens entspricht. Die einzelnen Streifen werden dann typischerweise nacheinander entlang dieser Rillen von der bereitgestellten rechteckigen Platte abgetrennt. Die Rillen stellen dabei Schwächungslinien in dem Material der Platte dar, die das Abtrennen des einzelnen Streifens erleichtern, indem dieser an der Rille beispielsweise von der Platte abgebrochen oder abgerissen wird.

Bei bekannten Kaugummiverpackungsmaschinen und den darin enthaltenen Vorrichtungen zum Herstellen der einzelnen Kaugummistreifen werden die größeren rechteckigen Produktplatten (so genannte "Slabs") mittels geeigneter Fördereinrichtungen zu einer Separiereinrichtung oder Separierstation zugeführt, in der die einzelnen Produktstreifen (Kaugummistreifen, z.B. so genannte "tab gum" oder "stick gum") aus der Platte gebildet werden, indem die Produktstreifen durch geeignete Separiereinrichtungen sukzessive und kontinuierlich von der zugeführten Platte abgetrennt werden. Die Plattenfördereinrichtungen sind typischerweise kontinuierlich laufende Ketten- oder Riemenförderer, mit oder ohne Mitnehmern. Die Platten werden von diesen Fördereinrichtungen einzeln nacheinander in ihrer Längsrichtung zu der Separierstation zugeführt. Im Zuge dieser Förderung treffen die einzelnen rechteckigen Platten jeweils auf eine vorhergehende Platte, indem jede Platte mit ihrer vorderen kurzen Seite beispielsweise an die vorhergehende Platte anstößt bzw. zu dieser aufschließt, so dass die einzelnen aufeinander folgenden Platten lückenlos und vorzugsweise formschlüssig und positionsgenau in ihrer Längsrichtung hintereinander liegen und so von den Fördereinrichtungen zu der Separiereinrichtung zugeführt werden. In der Separiereinrichtung werden die einzelnen Produktstreifen von der jeweils vordersten Platte an deren vorderem, schmalen Ende abgetrennt.

Wesentlich hierbei ist, dass die Produktplatten in ihrer Längsrichtung im Wesentlichen nahtlos aufeinander folgend gefördert werden, dass also keine Lücke zwischen ihnen besteht, damit in der nachfolgenden Separiereinrichtung kontinuierlich und gleichmäßig die einzelnen Produktstreifen mit einer im Wesentlichen gleich bleibenden Breite und im Wesentlichen gleich bleibenden Abständen voneinander gebildet werden können und anschließend in entsprechender Weise kontinuierlich weiter gefördert werden können, um dann beispielsweise einzeln und/oder in Gruppen verpackt zu werden. Sollte jedoch eine Lücke zwischen den aufeinander folgenden Platten vor oder während ihrer Zuführung zu der Separierstation bestehen, oder um die Bildung solcher Lücken im Zuge der Förderung der Platten zu vermeiden, sind geeignete Maßnahmen zu ergreifen bzw. Einrichtungen vorzusehen, die bewirken, dass solche Lücken zwischen den Platten geschlossen bzw. vermieden werden. Derartige Maßnahmen sind beispielsweise in der oben genannten Patentanmeldung der Anmelderin beschrieben. Weitere derartige Maßnahmen und Einrichtungen werden unten im Zusammenhang mit der vorliegenden Erfindung beschrieben.

Die genannte Patentanmeldung beschreibt des Weiteren eine Ausführungsform einer Separierstation zum Abtrennen der einzelnen Streifen von den zugeführten Platten. Demnach umfassen die Separiereinrichtungen mehrere aufeinander folgende Fördereinrichtungen, die die zugeführten Platten und die daraus gebildeten einzelnen Streifen ergreifen und weiterfördern. Dabei nehmen die Fördergeschwindigkeiten der einzelnen aufeinander folgenden Fördereinrichtungen in Förderrichtung im Wesentlichen zu, um einen Abstand zwischen den einzelnen gebildeten Streifen zu erzeugen, der für die nachfolgende Weiterförderung der Streifen erforderlich ist.

Bei dieser bekannten Separiereinrichtung sind mehrere parallel zueinander angeordnete, drehbare Walzenpaare in Förderrichtung hintereinander angeordnet, wobei die Rotations- bzw. Fördergeschwindigkeit der aufeinander folgenden Walzenpaare in Förderrichtung zunimmt. Bei dieser Ausführungsform ergreift das in Förderrichtung erste Walzenpaar die zugeführte Platte und zieht diese weiter, und die nachfolgenden Walzenpaare trennen aufgrund der Geschwindigkeitserhöhung gegenüber dem ersten Walzenpaar den Streifen von der Platte ab. Aufgrund der jeweils höheren Fördergeschwindigkeit der nachfolgenden Walzenpaare wird schließlich ein Abstand zwischen den einzelnen abgetrennten Streifen gebildet.

Bei dieser Ausführungsform haben die aufeinander folgenden Walzenpaare typischerweise einen gemeinsamen Antrieb in der Maschine, so das die Rotations- bzw. Fördergeschwindigkeiten der Walzen zum einen im wesentlichen immer gleich bleiben und sich zum anderen zwischen den einzelnen Walzenpaaren nicht relativ zueinander verändern können. Insbesondere sind die Rotations- bzw. Fördergeschwindigkeiten der einzelnen Walzenpaare hierbei nicht individuell und unabhängig voneinander steuer- oder regelbar.

Bei der bekannten Separiereinrichtung ist des Weiteren in Förderrichtung hinter den aufeinander folgenden mehreren Walzenpaaren eine sternförmige Fördereinrichtung (Separierstern) vorgesehen, die um eine parallel zu den Drehachsen der Walzenpaare angeordnete Drehachse rotiert. Die sternförmige Fördereinrichtung ergreift den von den Walzenpaaren von der Platte abgetrennten Produktstreifen und beschleunigt diesen in Förderrichtung weiter, um einen vordefinierten, einheitlichen Abstand zwischen den einzelnen aufeinander folgenden Produktstreifen zu bilden. Dieser Abstand ist erforderlich, um die Produktstreifen anschließend geordnet unter regelmäßigen Abständen voneinander weiterzufördern und beispielsweise einer nachfolgenden Verpackungsstation zuzuführen. Zu diesem Zweck arbeitet die sternförmige Fördereinrichtung in der Regel mit einer festen Rotations- bzw. Fördergeschwindigkeit, die von der Geschwindigkeit und Taktung der nachfolgenden Fördereinrichtungen (so genannte "Maschinengeschwindigkeit") vorgegeben bzw. mit dieser synchronisiert ist.

Kaugummiverpackungsmaschinen, und somit auch die darin enthaltenen Streifensepariereinrichtungen, arbeiten mit hohen Geschwindigkeiten, wobei heute beispielsweise Leistungen von ca. 4000 Artikeln (Produktstreifen) pro Minute angestrebt werden. Trotz dieser hohen Leistungen soll eine schonende Behandlung der Produkte (Kaugummistreifen) gewährleistet sein, das heißt, Abrieb und Beschädigung der Produkte müssen verringert oder verhindert werden. Außerdem sollen die Maschinen in der Lage sein, Produkte (Kaugummis) unterschiedlicher Materialien bzw. mit unterschiedlichen Materialbeschaffenheiten (Textur), beispielsweise unterschiedlichen Härtegraden, zu verarbeiten. So kann es beispielsweise erwünscht sein, Kaugummisorten mit einer weicheren Materialbeschaffenheit, das heißt einem geringeren Härtegrad, zu verarbeiten. Hierbei können die Kaugummistreifen beispielsweise auch aus mehreren Schichten (Layern) bestehen, die unterschiedliche Härtegrade haben. Gebräuchlich ist hier beispielsweise ein aus drei Schichten bestehender Kaugummistreifen, bei dem zwischen einer Ober- und einer Unterschicht aus einem Kaugummimaterial eine Schicht einer anderen Materialbeschaffenheit oder Konsistenz angeordnet ist, beispielsweise eine weichere Füllung für eine zusätzliche Geschmacksrichtung.

Aufgrund ihrer geringeren Härte und einer damit ggf. verbundenen geringeren Formstabilität bewirken derartige Produkte unter Umständen höhere Anforderungen an die maschinellen Fördereinrichtungen. Die Förder- und Verpackungsmaschinen müssen somit in der Lage sein, derartige Produkte mit hoher Maschinenleistung, aber bei schonender Produktbehandlung zu verarbeiten. Dabei muss eine hohe Prozesssicherheit gewährleistet sein, das heißt Probleme im Zuge der Förderung der Produkte durch die Maschine (zum Beispiel Produktstau, Verstopfungen, Blockierungen, etc.) müssen vermieden werden, um die gewünschte hohe Maschinenleistung zu bewerkstelligen. Schließlich dürfen die Produkte bei der Förderung nicht beschädigt werden.

Bei bestimmten Kaugummimaterialien und -strukturen, insbesondere solchen mit weicherer Beschaffenheit, das heißt, einem geringeren Härtegrad, kann das Problem bestehen, dass der im Bereich der Separiereinrichtungen aus den zugeführten Platten gebildete Produktstreifen am Ausgang der Separiereinrichtungen, das heißt beispielsweise im Bereich der sich an die Förderwalzenpaare anschließenden sternförmigen Fördereinrichtung (Separierstern), nicht den erwünschten, vorgegebenen Abstand zu dem vorhergehenden Produktstreifen hat. Der betreffende Produktstreifen kann am Ausgang der Separiereinrichtungen also beispielsweise eine Position haben, die nicht einer Sollposition entspricht, die erforderlich ist, damit der betreffende Produktstreifen korrekt und lagegenau von dem Separierstern an die nachfolgende Fördereinrichtung übergeben wird. Diese nachfolgende Fördereinrichtung weist typischerweise Mitnehmer für die Produktstreifen auf, die unter festen, gleichen Abständen in Förderrichtung hintereinander angeordnet sind. Der von den Separiereinrichtungen gebildete und abgegebene Produktstreifen muss also positionsgenau an den jeweils nächsten bereitstehenden Mitnehmer der nachfolgenden Fördereinrichtung übergeben werden. Ist diese positionsgenaue Bereitstellung und Zuführung des Produktstreifens nicht gewährleistet, besteht die Gefahr, dass beispielsweise die sternförmige Fördereinrichtung (Separierstern) der Separiereinrichtungen und/oder der betreffende Mitnehmer der nachfolgenden Fördereinrichtung falsch oder nicht an dem betreffenden Produktstreifen angreift, wodurch dieser nicht korrekt weiter gefördert und unter Umständen beschädigt werden kann.

Aufgrund einer derartigen fehlerhaften Position und entsprechender fehlerhafter Förderung und Übergabe des Produktstreifens kann es in diesen Maschinenbereichen zu Problemen kommen, beispielsweise zu einem Produktstau und Blockaden in der Förderstrecke, die unter Umständen einen Stillstand der gesamten Maschine bedingen, sowie zu einer Beschädigung einerseits der Produktstreifen und andererseits auch der betroffenen Maschinenkomponenten.

Daneben kann bei den bekannten Kaugummiverpackungsmaschinen und den darin enthaltenen Streifensepariervorrichtungen das Problem auftreten, dass die Platten, aus denen in den Separiereinrichtungen die einzelnen Streifen zu bilden sind, nicht lückenlos aneinander liegend zu den Separiereinrichtungen zugeführt werden, das heißt, dass ein Abstand oder eine Lücke zwischen einer ersten zu den Separiereinrichtungen zugeführten Platte und einer nachfolgenden nächsten Platte besteht, wie es oben schon ausgeführt wurde. Derartige Lücken zwischen den aufeinander folgenden Platten können bewirken, dass die Einzelstreifen nicht korrekt in den Separiereinrichtungen gebildet werden können, oder sie können ebenfalls dazu beitragen, dass die in den Separiereinrichtungen gebildeten Einzelstreifen nicht in korrekter Lageposition von den sternförmigen Fördereinrichtungen übernommen und an die nachfolgenden Mitnehmerfördereinrichtungen übergeben werden. Das bedeutet, dass unter Umständen wiederum der Abstand zwischen den aufeinander folgenden Einzelstreifen am Ausgang der Separiereinrichtungen nicht dem vorgegebenen Abstand entspricht, der entsprechend der Teilung der Mitnehmer an der nachfolgenden Fördereinrichtung bei der Übergabe der Einzelstreifen notwendig ist und für eine fehlerfreie Übergabe und Förderung eingehalten werden muss.

Das Problem, dass eine Lücke zwischen zwei aufeinander folgenden Platten im Zuge ihrer Förderung und Zuführung zu den Separiereinrichtungen besteht, kann wiederum bei bestimmten Kaugummimaterialien und -strukturen auftreten, beispielsweise solchen mit weicherer Beschaffenheit, das heißt, einem geringeren Härtegrad.

Ausgehend von dem oben beschriebenen Stand der Technik und den genannten Nachteilen und Problemen liegt der Erfindung die Aufgabe zugrunde, eine Vorrichtung und ein Verfahren zum Herstellen einzelner streifenförmiger Gegenstände, insbesondere Kaugummistreifen, zu schaffen, die mit einer höheren Prozesssicherheit arbeiten und damit eine hohe Maschinenleistung ermöglichen. Insbesondere sollen ein Verfahren und eine Vorrichtung zum Herstellen einzelner Produktstreifen geschaffen werden, bei denen verhindert wird, dass die gebildeten Einzelstreifen am Ausgang der Streifenherstellungsvorrichtung eine falsche Position haben, insbesondere eine Position, die nicht zu einem vorgegebenen Abstand zwischen den einzelnen aufeinander folgenden Produktstreifen für deren Weiterförderung passt. Dadurch soll schließlich die Möglichkeit verbessert werden, Produkte mit unterschiedlichen Materialbeschaffenheiten und/oder Strukturen zu verarbeiten, so zum Beispiel Kaugummisorten mit einer weicheren Materialbeschaffenheit und/oder einer mehrschichtigen Konfiguration. Dabei sollen diese Produkte schonend behandelt und nicht beschädigt werden.

Diese Aufgabe wird erfindungsgemäß gelöst durch ein Verfahren und eine Vorrichtung zum Herstellen einzelner streifenförmiger Gegenstände, insbesondere zum Verzehr geeigneter Gegenstände, insbesondere Kaugummistreifen, mit folgenden Verfahrensschritten und Merkmalen: Zuführen von im wesentlichen rechteckigen Platten, aus denen die streifenförmigen Gegenstände zu bilden sind, wobei die Länge der kürzeren Seiten der Platten im Wesentlichen der Länge eines zu bildenden streifenförmigen Gegenstands entspricht, und wobei im Wesentlichen parallel zu den kürzeren Seiten der Platten mehrere parallel zueinander verlaufende Rillen unter gleichen Abständen in den Platten angeordnet sind, wobei der Abstand zwischen jeweils zwei nebeneinander angeordneten Rillen im Wesentlichen der Breite eines zu bildenden streifenförmigen Gegenstands entspricht; und Bilden einzelner streifenförmiger Gegenstände aus den in ihrer Längsrichtung einzeln aufeinander folgend zugeführten Platten. Dabei umfasst der Schritt des Bildens der einzelnen streifenförmigen Gegenstände insbesondere folgende Verfahrensschritte und Merkmale: Abtrennen jeweils eines einzelnen streifenförmigen Gegenstands von der Platte an ihrem in Förderrichtung vorderen Ende entlang der jeweils vordersten Rille; Bilden eines vorgegebenen Abstands zwischen den einzelnen aufeinander folgenden abgetrennten streifenförmigen lungsvorrichtung für eine anschließende weitere Förderung der gebildeten streifenförmigen Gegenstände; Erfassen einer tatsächlichen Position jedes einzelnen abgetrennten streifenförmigen Gegenstands in Förderrichtung während des Abtrennens der streifenförmigen Gegenstände von der Platte bzw. im Bereich der Abtrenneinrichtungen; und Korrigieren der Position der einzelnen abgetrennten streifenförmigen Gegenstände in Förderrichtung, wenn die erfasste tatsächliche Position des streifenförmigen Gegenstands nicht einer Position entspricht, die zu dem vorgegebenen Abstand zwischen den einzelnen aufeinander folgenden streifenförmigen Gegenständen am Ausgang der Streifenherstellungsvorrichtung für eine anschließende weitere Förderung der gebildeten streifenförmigen Gegenstände passt.

Erfindungsgemäß wird somit eine Regelstrecke oder ein Regelkreis geschaffen, bei dem zunächst die Ist-Position des einzelnen gebildeten Produktstreifens in der Streifenherstellungsvorrichtung ermittelt wird, und bei dem die Position des Produktstreifens dann in eine vorgegebene Soll-Position korrigiert wird, wenn die ermittelte Ist-Position nicht der Soll-Position entspricht. Dabei ist die Soll-Position durch den vorgegebenen Abstand definiert, der am Ausgang der Streifenherstellungsvorrichtung zwischen den einzelnen aufeinander folgenden Produktstreifen vorliegen muss, damit diese korrekt und positionsgenau von einer nachfolgenden Fördereinrichtung übernommen und weitergefördert werden können.

Die einzelnen Fördereinrichtungen oder Gruppen von Fördereinrichtungen in der Streifenherstellungsvorrichtung aufweisen jeweils eigene Antriebseinrichtungen, die individuell regelbar sind, und dass Sensoreinrichtungen zum Erfassen der tatsächlichen Position jedes einzelnen abgetrennten streifenförmigen Gegenstands in Förderrichtung im Bereich der Fördereinrichtungen angeordnet sind. Dabei arbeiten die Sensoreinrichtungen derart mit den einzelnen Antriebseinrichtungen zusammen, dass eine Steuerung oder Regelung der Antriebseinrichtungen derart erfolgt, dass die Position der einzelnen abgetrennten streifenförmigen Gegenstände in Förderrichtung korrigiert wird, wenn die erfasste tatsächliche Position des streifenförmigen Gegenstands nicht einer Position entspricht, die zu dem vorgegebenen Abstand zwischen den einzelnen aufeinander folgenden streifenförmigen Gegenständen am Ausgang der Streifenherstellungsvorrichtung passt.

In einer weiteren bevorzugten Ausführungsform der Erfindung ist vorgesehen, dass im Bereich des Zuführens der rechteckigen Platten zu dem Bereich des Bildens der einzelnen streifenförmigen Gegenstände aus den Platten Fördereinrichtungen vorgesehen sind, die die einzelnen Platten in ihrer Längsrichtung nacheinander derart fördern, dass jede Platte im Wesentlichen positionsgenau, lückenlos und vorzugsweise ohne Staudruck an die jeweils vorhergehende Platte anschließt. Dafür sind im Bereich des Zuführens der Platten folgende weitere Verfahrensschritte und Merkmale vorgesehen: Erfassen einer tatsächlichen Position jeder Platte in Förderrichtung im Bereich der Zuführfördereinrichtungen; und Korrigieren der Position der einzelnen Platten in Förderrichtung, wenn die erfasste tatsächliche Position der Platte nicht einer vorgegebenen Position derart entspricht, dass die aufeinander folgenden Platten im Wesentlichen ohne Lücken zwischen ihnen zu dem nachfolgenden Bereich des Bildens der einzelnen streifenförmigen Gegenstände zugeführt werden.

Somit ist bei dieser Ausführungsform auch im Bereich der Zuführung der Platten eine Regelstrecke oder ein Regelkreis vorgesehen, bei dem die Fördereinrichtungen der Plattenzuführung wiederum individuell regelbare Antriebseinrichtungen aufweisen, und bei dem wiederum Sensoreinrichtungen zum Erfassen der tatsächlichen Position der einzelnen Platten in Förderrichtung im Bereich der Fördereinrichtungen angeordnet sind. Dabei arbeiten die Sensoreinrichtungen derart mit den Antriebseinrichtungen zusammen, dass eine Steuerung oder Regelung der Antriebseinrichtungen derart erfolgt, dass die Position der einzelnen Platten in Förderrichtung so korrigiert wird, dass keine Lücken zwischen den aufeinander folgenden Platten bestehen, wenn die erfasste tatsächliche Position einer Platte nicht der vorgegebenen Position entspricht.

Durch das erfindungsgemäße Verfahren und die erfindungsgemäße Vorrichtung wird gewährleistet, dass die einzelnen Produktstreifen korrekt und positionsgenau aus den zugeführten Produktplatten gebildet, weitergefördert und an die nachfolgenden Fördereinrichtungen übergeben werden. Dadurch wird eine höhere Prozesssicherheit als bei den Maschinen des Standes der Technik erreicht, da Beschädigungen der Produktstreifen und/oder Produktstaus in der Förderstrecke vermieden werden. Mit dem erfindungsgemäßen Verfahren und der erfindungsgemäßen Vorrichtung können somit auch Produkte, insbesondere Kaugummistreifen, mit geringeren Materialhärtegraden verarbeitet werden. Die damit erreichte höhere Prozesssicherheit gewährleistet schließlich insgesamt eine höhere Maschinenleistung als im Stand der Technik.

Weitere Einzelheiten und Vorteile der Erfindung ergeben sich aus der nachfolgenden detaillierten Beschreibung eines Ausführungsbeispiels in Verbindung mit den beigefügten Zeichnungen.
Fig. 1 zeigt eine schematische Seitenansicht der erfindungsgemäßen Streifenherstellungsvorrichtung;
Fig. 2 zeigt eine vergrößerte, perspektivische, gesprengte Ansicht der Separiereinrichtungen der erfindungsgemäßen Streifenherstellungsvorrichtung;
Fig. 3 zeigt eine vergrößerte Seitenansicht einer bevorzugten Ausführungsform der erfindungsgemäßen Streifenherstellungsvorrichtung.

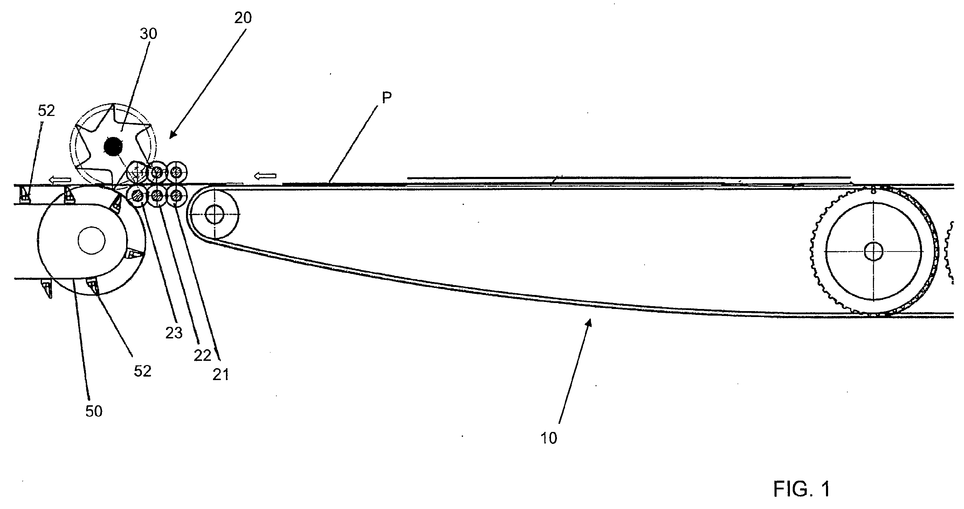

In den Darstellungen der Figs. 1 bis 3 durchläuft das Produkt die Maschine von rechts nach links, wobei jeweils am rechten Ende dieser Förderstrecke eine Platte P auf Plattenfördereinrichtungen (Plattenbereitstellungs- und -zuführeinrichtungen) 10 bereitgestellt und zugeführt wird. Aus der Platte P werden die einzelnen Produktstreifen S, insbesondere Kaugummistreifen, in einer nachfolgenden Separiereinrichtung 20 gebildet. Am linken Ende dieser Förderstrecke werden die gebildeten einzelnen Produktstreifen S zur Weiterförderung und Weiterverarbeitung an eine nachfolgende Fördereinrichtung 50 abgegeben. Es versteht sich, dass je nach Anwendungsfall und Ausführung der Maschine auch ein Produktfluss von links nach rechts möglich ist.

Die Figs. 1 bis 3 zeigen auf ihrer rechten Seite jeweils die Plattenbereitstellungs- und -zuführeinrichtungen 10. Diese Fördereinrichtungen sind typischerweise Riemen- oder Kettentransporteinrichtungen, die wahlweise Mitnehmer 12 aufweisen können, die an den zu fördernden Platten P angreifen. Die rechteckigen Platten P liegen flach, in der Regel einzeln, auf den Fördereinrichtungen 10 und werden von diesen in ihrer Längsrichtung vorwärts, das heißt in den Abbildungen nach links, bewegt.

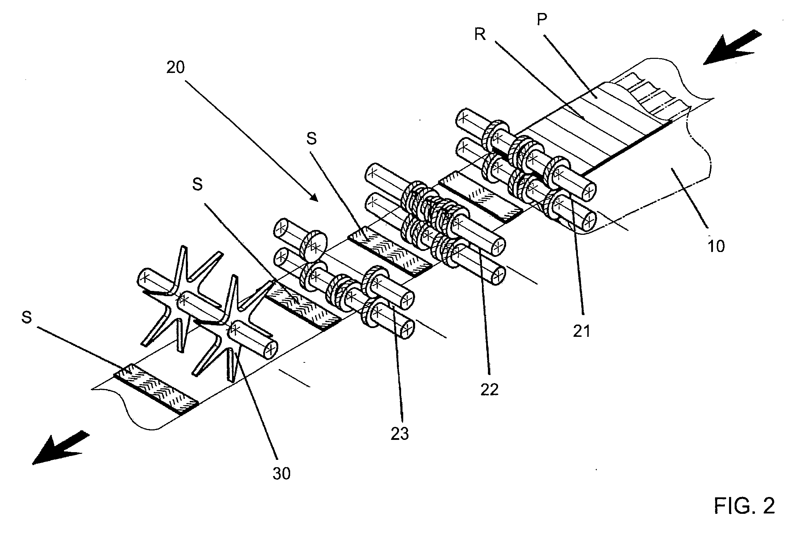

Die rechteckigen Platten P weisen parallel zu ihren kurzen Seiten und parallel zueinander verlaufende Rillen R auf, die unter gleichen Abständen voneinander angeordnet sind. Der Abstand zwischen jeweils zwei benachbarten Rillen R entspricht im Wesentlichen der Breite eines zu bildenden Produktstreifens S. Die Rillen R verlaufen somit senkrecht zu der Förderrichtung der Platte P (s. zum Beispiel Fig. 2). Die Bildung dieser Rillen R in der Platte P sowie die Bereitstellung der Platte P auf den Plattenfördereinrichtungen 10 ist im Detail in der eingangs genannten Patentanmeldung der Anmelderin beschrieben.

Auf den Plattenfördereinrichtungen 10 werden die Platten P vorzugsweise derart angeordnet und gefördert, dass die einzelnen Platten P sich formschlüssig, positionsgenau und insbesondere ohne Lücke an die jeweils vorausgehende Platte P anschließen. Vorzugsweise liegen die Platten P auch ohne Staudruck lückenlos hintereinander, das heißt, die jeweils nachfolgende Platte P drückt vorzugsweise nicht von hinten gegen die jeweils vorhergehende Platte P. Für den Fall, dass in diesem Bereich aber doch Lücken L zwischen zwei aufeinander folgenden Platten gegeben sein sollten, sind Einrichtungen vorgesehen, durch die diese Lücken L geschlossen werden können, wie es weiter unten im Detail beschrieben wird.

An die Plattenzuführeinrichtungen 10 schließen sich die Separiereinrichtungen 20 zum Bilden der einzelnen streifenförmigen Gegenstände S aus den Platten P an. Die Separiereinrichtungen 20 umfassen dabei insbesondere Einrichtungen zum Abtrennen jeweils eines einzelnen Produktstreifens S von der zugeführten Platte P an ihrem in Förderrichtung vorderen Ende durch Abreißen oder Abbrechen entlang der jeweils vordersten Rille R in der Platte P derart, dass sich die zugeführte Platte P und der abgetrennte Streifen S im Wesentlichen in der gleichen Ebene befinden. Die Separiereinrichtungen 20 umfassen des Weiteren Einrichtungen zum Weiterfördern und Beschleunigen des abgetrennten Streifens S in Förderrichtung zur Bildung eines vordefinierten Abstands zwischen den einzelnen aufeinander folgenden Streifen S am Ausgang der Separiereinrichtungen 20.

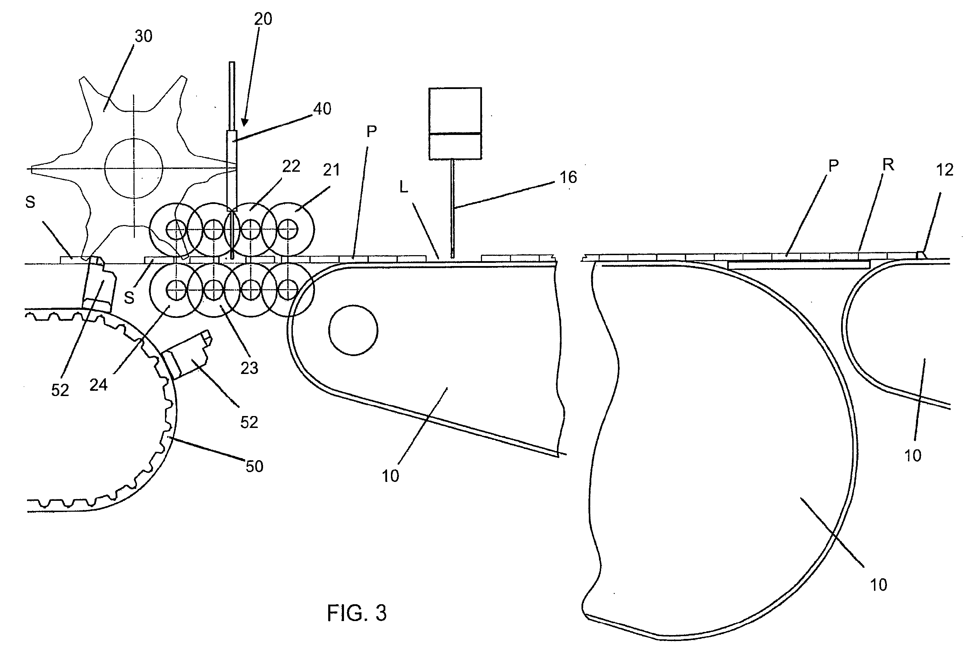

In den Darstellungen der Figs. 1 und 2 umfassen die Separiereinrichtungen 20 drei parallel zueinander angeordnete, drehbare Walzenpaare 21, 22, 23, die in Förderrichtung hintereinander angeordnet sind und die in geeigneter Weise ineinander eingreifen. In der in Fig. 3 gezeigten Ausführungsform sind vier solche parallel zueinander angeordneten Walzenpaare 21, 22, 23, 24 in Förderrichtung hintereinander angeordnet. Die konkrete Anzahl der Walzenpaare hängt von dem jeweiligen Anwendungsfall ab. Jedes der Walzenpaare ergreift die zugeführte Platte P bzw. die daraus gebildeten Produktstreifen S und fördert diese weiter, indem jedes Walzenpaar das Produkt zwischen seinen beiden, sich gegenläufig drehenden Walzen aufnimmt. Wie aus den Zeichnungen ersichtlich ist, ist somit bei jedem Walzenpaar eine Walze oberhalb und die andere Walze unterhalb der Förderebene angeordnet.

Um diese Gegebenheiten deutlich zu machen, zeigt Fig. 2 eine gesprengte Ansicht der Separiereinrichtungen 20 und insbesondere der Anordnungen der Walzenpaare 21, 22, 23. Demgegenüber zeigen die Figs. 1 und 3 die normale Anordnung dieser Komponenten innerhalb der Maschine. Der Abstand zwischen den Achsen der aufeinander folgenden Walzenpaare in Förderrichtung muss dabei so bemessen sein, dass der von einem Walzenpaar geförderte und freigegebene Streifen S von dem nachfolgenden, nächsten Walzenpaar ergriffen und weitergefördert werden kann.

Die Rotationsgeschwindigkeit bzw. insbesondere die Fördergeschwindigkeit der aufeinander folgenden Walzenpaare 21, 22, 23, 24 nimmt in Förderrichtung im Wesentlichen zu. Wie die Figs. 2 und 3 zeigen, wird die von den Plattenfördereinrichtungen 10 zugeführte Platte P von dem ersten Walzenpaar 21 ergriffen. Hierbei kann insbesondere vorgesehen sein, dass die Fördergeschwindigkeit des ersten Walzenpaars 21 im Wesentlichen der Geschwindigkeit der Zuführung der Platte P entspricht, so dass die Platte P durch das erste Walzenpaar 21 von den Plattenfördereinrichtungen 10 mit konstanter Geschwindigkeit übernommen und abgezogen wird. Das nachfolgende, zweite Walzenpaar 22 dreht sich gegenüber dem ersten Walzenpaar 21 mit einer größeren Geschwindigkeit. Dieses bewirkt, dass die Walzen des zweiten Walzenpaars 22 an dem vorderen Ende der Platte P entlang der jeweils vordersten Rille R einen Streifen S abtrennen, insbesondere abbrechen oder abreißen, da die Fördergeschwindigkeit der Produkte durch das zweite Walzenpaar 22 erhöht wird, das heißt, die Produktförderbewegung beschleunigt wird.

Das dritte Walzenpaar 23 hat gegenüber dem vorhergehenden zweiten Walzenpaar 22 wiederum eine höhere Förder- oder Rotationsgeschwindigkeit, womit der durch das dritte Walzenpaar 23 laufende Streifen S in Förderrichtung weiter beschleunigt wird. In entsprechender Weise hat auch das vierte Walzenpaar 24 (Fig. 3) wiederum gegenüber dem vorhergehenden dritten Walzenpaar 23 eine höhere Förder- oder Rotationsgeschwindigkeit, womit der Streifen S nochmals weiter beschleunigt wird. Insgesamt wird auf diese Weise der Abstand zwischen den einzelnen aufeinander folgenden Streifen S in Förderrichtung bei dem Durchlauf durch die Walzenpaare 21, 22, 23, 24 sukzessive vergrößert.

In einer alternativen Ausführungsform kann bereits das erste Walzenpaar 21 eine Rotations- bzw. Fördergeschwindigkeit haben, die größer ist als die Geschwindigkeit der Zuführung der Platte P über die Plattenfördereinrichtungen 10 zu dem ersten Walzenpaar 21. In diesem Fall wird der Produktstreifen S bereits durch das erste Walzenpaar 21 entlang der vordersten Rille R von der Platte P abgetrennt.

Wie den Figs. 1 bis 3 weiter zu entnehmen ist, ist in den Separiereinrichtungen 20 eine sternförmige Fördereinrichtung (Separierstern) 30 in Förderrichtung hinter den Walzenpaaren 21, 22, 23, 24 angeordnet. Diese sternförmige Fördereinrichtung 30 dreht sich dabei um eine Achse, die im Wesentlichen parallel zu den Rotationsachsen der vorhergehenden Walzenpaare angeordnet ist. Die Rotations- bzw. Fördergeschwindigkeit des Separiersterns 30 ist gegenüber der Rotations- bzw. Fördergeschwindigkeit der vorhergehenden Walzen typischerweise nochmals erhöht. Auf diese Weise beschleunigt der Separierstern 30 den Streifen S nochmals in Förderrichtung weiter, wodurch der Abstand zwischen den aufeinander folgenden Streifen S hier nochmals vergrößert wird. Wie eingangs erläutert wurde, wird hierbei insbesondere ein vorgegebener Abstand zwischen den aufeinander folgenden Streifen S gebildet, der der Teilung, das heißt dem Abstand, einzelner aufeinander folgender Mitnehmer 52 einer nachfolgenden Fördereinrichtung 50 entspricht, mit der der Streifen S zu einer nächsten Verarbeitungsstation (beispielsweise einer Produktverpackungsstation) weitergefördert wird. Diese nachfolgende Fördereinrichtung 50 ist beispielsweise in den Figs. 1 und 3 jeweils am linken Bildrand dargestellt.

Wie hier erkennbar ist, übergibt der Separierstern 30 die einzelnen gebildeten Streifen S an die nachfolgende Fördereinrichtung 50, die Mitnehmer 52 für jeweils einen Streifen S in einem festen, vorgegebenen Abstand aufweist. Der Separierstern 30 übergibt die Streifen S somit mit einer Geschwindigkeit und mit einem Abstand voneinander an die nachfolgende Fördereinrichtung 50, die bzw. der der Geschwindigkeit und dem Abstand der einzelnen Mitnehmer 52 der Fördereinrichtung 50 entspricht. Die Fördereinrichtung 50 kann wiederum durch geeignete Fördermittel gebildet sein, beispielsweise Riemen- oder Kettenfördereinrichtungen mit daran angebrachten Mitnehmern 52, die die Produktstreifen S ergreifen und weiter vorschieben.

Wie eingangs erläutert wurde, kann es unter bestimmten Voraussetzungen auftreten, dass die einzelnen abgetrennten, aufeinander folgenden Streifen S am Ausgang der Separiereinrichtungen 20 eine tatsächliche Position (Ist-Position) haben, die nicht einer Soll-Position entspricht, die zu dem vorgegebenen Abstand zwischen den einzelnen aufeinander folgenden Streifen S passt, der durch die Teilung der Mitnehmer 52 der nachfolgenden Fördereinrichtung 50 bedingt ist. Dieses kann bei den bekannten Streifenherstellungsvorrichtungen im Rahmen von Kaugummiverpackungsmaschinen beispielsweise in solchen Fällen auftreten, in denen ein weicheres Kaugummimaterial verwendet wird als vorher üblich. In solchen Fällen kann der gebildete Streifen S im Zuge der Förderung durch die Separiereinrichtung 20 seine Position so verändern, dass seine tatsächliche Lage oder Position in Förderrichtung nicht mehr der vorgegebenen Soll-Position entspricht. Dieses kann dann beispielsweise zu unerwünschten Kollisionen zwischen den Fördereinrichtungen, insbesondere dem Separierstern 30, und dem Kaugummistreifen S führen, indem der Separierstern 30 aufgrund einer falschen Position des Streifens S nicht korrekt an dem Streifen S für eine korrekte Weiterförderung angreift.

Um derartige Positionsabweichungen des Streifens S zu vermeiden, sind in der Separiereinrichtung 20 Sensoreinrichtungen 40 zum Erfassen der tatsächlichen Position jedes einzelnen abgetrennten Streifens S in Förderrichtung vorgesehen. Wie Fig. 3 zeigt, kann ein derartiger Sensor 40 im Bereich der Walzenpaare 21, 22, 23, 24 angeordnet sein. Beispielsweise kann der Sensor 40 konkret die Position des Streifens S zwischen dem zweiten Walzenpaar 22 und dem dritten Walzenpaar 23 überwachen und erfassen. Der Sensor 40 kann auch so ausgebildet sein, dass er den tatsächlichen Abstand zwischen zwei aufeinander folgenden Streifen S erfasst. Der Sensor 40 kann beispielsweise aus einem optischen Sensor mit Lichtwellenleiter gebildet sein, was aufgrund seiner kleineren geometrischen Abmessungen und den begrenzten Platzverhältnissen im Bereich der Walzenpaare vorteilhaft sein kann.

Die von dem Sensor 40 ermittelten Positionsinformationen werden dann zum Korrigieren der Position der Streifen S in Förderrichtung verwendet, wenn die erfasste tatsächliche Position eines Streifens S nicht der Soll-Position entspricht, die dem vorgegebenen Abstand zwischen den aufeinander folgenden Streifen S am Ausgang der Separiereinrichtung 20 entspricht. Diese Positionskorrektur erfolgt über eine Regelung oder Steuerung der Antriebe der Walzenpaare 21, 22, 23, 24. Insbesondere weist jedes Walzenpaar 21, 22, 23, 24 einen eigenen Antrieb auf, beispielsweise in Form eines Elektromotors, insbesondere eines hochdynamischen, präzise steuerbaren Servomotors (in den Zeichnungen nicht dargestellt). Mittels dieser individuellen Antriebe sind die einzelnen Walzenpaare somit individuell oder in geeigneten Gruppen in ihrer Rotations- bzw. Fördergeschwindigkeit regelbar.

Für die erwünschte Korrektur der Position der einzelnen Streifen S bei einer Abweichung der Ist-Position von der Soll-Position arbeiten die Sensoreinrichtungen 40 so mit den einzelnen Antriebseinrichtungen der einzelnen Walzenpaare zusammen, dass die Antriebseinrichtungen derart geregelt werden, dass die Position der einzelnen Streifen S in Förderrichtung bei Bedarf im Einzelfall auf die Soll-Position korrigiert wird. Hierfür werden die Antriebe insbesondere so geregelt, dass die Rotationsgeschwindigkeiten der Walzen je nach Bedarf erhöht oder verringert werden.

Auf diese Weise bilden die Sensoreinrichtungen 40 zusammen mit den Antriebseinrichtungen einzelner oder aller oder geeigneter Gruppen der Walzenpaare 21, 22, 23, 24 einen Regelkreis, der eine Synchronisierung der Position der einzelnen Streifen S mit den Gegebenheiten und insbesondere der Fördergeschwindigkeit und den Abstandsverhältnissen der nachfolgenden Fördereinrichtungen 50 bewerkstelligt.

Wie oben ebenfalls bereits erläutert wurde, kann unter bestimmten Bedingungen der Fall eintreten, dass die rechteckigen Platten P nicht lückenlos an die Separiereinrichtungen 20 zugeführt werden, das heißt, dass im Bereich der Plattenfördereinrichtungen 10 eine Lücke L zwischen zwei aufeinander folgenden Platten P entsteht oder vorliegt. Wie oben auch erwähnt wurde, können derartige Lücken zwischen den aufeinander folgenden Produktplatten P in der weiteren Abfolge der Förderung und Verarbeitung der Platten und der daraus gebildeten einzelnen Streifen S zu Problemen führen. Aus diesem Grunde können auch im Bereich der Plattenfördereinrichtungen 10 Sensoreinrichtungen 16 vorgesehen sein, die eine tatsächliche Position jeder Platte P in Förderrichtung im Bereich der Plattenfördereinrichtungen 10 erfassen (vgl. Fig. 3). Der Sensor 16 kann auch so ausgebildet sein, dass er den tatsächlichen Abstand zwischen zwei aufeinander folgenden Platten P erfasst. Für den Fall, dass hierbei eine Abweichung zwischen der tatsächlichen Position (Ist-Position) der Platte P und einer Soll-Position der Platte P, in der die betroffene Platte P anforderungsgemäß ohne Lücke an die vorhergehende Platte P anschließt, festgestellt wird, ist auch im Bereich der Plattenfördereinrichtungen 10 eine Korrektur der Position der betroffenen Platte P vorgesehen.

Zu diesem Zweck ist der Antrieb der Plattenfördereinrichtungen 10 wiederum individuell steuerbar oder regelbar, beispielsweise indem der Antrieb von einem Elektro- oder Servomotor gebildet wird (in den Zeichnungen nicht dargestellt). Die Sensoreinrichtungen 16 der Plattenfördereinrichtungen 10 arbeiten dann wiederum so mit den Antriebseinrichtungen der Plattenfördereinrichtungen 10 zusammen, dass die Antriebe derart geregelt werden, dass eine von der Soll-Position abweichende Ist-Position der Platte P so korrigiert wird, dass sie die Soll-Position einnimmt, in der keine Lücke L zwischen den zwei betroffenen, aufeinander folgenden Platten P mehr besteht.

Die Sensoreinrichtungen 16 bilden mit den Antrieben der Plattenfördereinrichtungen 10 hier somit wiederum einen Regelkreis oder eine Regelstrecke, die bewirkt, dass eine auf den Plattenfördereinrichtungen 10 zwischen zwei aufeinander folgenden Platten P zunächst eventuell vorliegende Lücke L geschlossen wird. Je nach Bedarf im gegebenen Einzelfall kann die Fördergeschwindigkeit der Plattenfördereinrichtungen 10 mittels ihrer Antriebe dabei erhöht oder verringert werden. Durch diese Maßnahmen wird erreicht, dass die aufeinander folgende Platten P positionsgenau, lückenlos und vorzugsweise ohne Staudruck aneinander anschließen und in dieser Form den Separiereinrichtungen 20 zugeführt werden.

### Bezugszeichenliste

- P: Platte
- R: Rille in Platte P
- S: streifenförmiger Gegenstand, Streifen
- L: Lücke zwischen Platten P

- 10: Plattenfördereinrichtungen, Plattenbereitstellungs- und -zuführeinrichtungen
- 12: Mitnehmer
- 16: Sensor

- 20: Separiereinrichtungen
- 21: Erstes Walzenpaar
- 22: Zweites Walzenpaar
- 23: Drittes Walzenpaar
- 24: Viertes Walzenpaar

- 30: Sternförmige Fördereinrichtung, Separierstern

- 40: Sensor

- 50: Fördereinrichtungen
- 52: Mitnehmer

## Patentansprüche

1. Verfahren zum Herstellen einzelner streifenförmiger Gegenstände (S), insbesondere zum Verzehr geeigneter Gegenstände, insbesondere Kaugummistreifen, mit folgenden Schritten:
- Zuführen von im wesentlichen rechteckigen Platten (P), aus denen die streifenförmigen Gegenstände (S) zu bilden sind, wobei die Länge der kürzeren Seiten der Platten (P) im wesentlichen der Länge eines zu bildenden streifenförmigen Gegenstands (S) entspricht, und wobei im wesentlichen parallel zu den kürzeren Seiten der Platten (P) mehrere parallel zueinander verlaufende Rillen (R) unter gleichen Abständen in den Platten (P) angeordnet sind, wobei der Abstand zwischen jeweils zwei nebeneinander angeordneten Rillen (R) der Breite eines zu bildenden streifenförmigen Gegenstands (S) entspricht; und
- Bilden einzelner streifenförmiger Gegenstände (S) aus den in ihrer Längsrichtung einzeln aufeinander folgend zugeführten Platten (P), wobei dieser Schritt folgende Schritte umfasst:
- Abtrennen jeweils eines einzelnen streifenförmigen Gegenstands (S) von der Platte (P) an ihrem in Förderrichtung vorderen Ende entlang der jeweils vordersten Rille (R); und
- Bilden eines definierten Abstands zwischen den einzelnen aufeinander folgenden abgetrennten streifenförmigen Gegenständen (S) in Förderrichtung für eine anschließende weitere Förderung der gebildeten streifenförmigen Gegenstände (S);
**dadurch gekennzeichnet, dass** der Schritt des Bildens der einzelnen streifenförmigen Gegenstände (S) folgende weitere Schritte umfasst:
- Erfassen einer tatsächlichen Position jedes einzelnen abgetrennten streifenförmigen Gegenstands (S) in Förderrichtung während des Abtrennens der streifenförmigen Gegenstände (S) von der Platte (P); und
- Korrigieren der Position der einzelnen abgetrennten streifenförmigen Gegenstände (S) in Förderrichtung, wenn die erfasste tatsächliche Position des streifenförmigen Gegenstands (S) nicht einer Position entspricht, die zu dem definierten Abstand zwischen den einzelnen aufeinander folgenden streifenförmigen Gegenständen (S) für eine anschließende weitere Förderung der gebildeten streifenförmigen Gegenstände (S) passt;
- wobei mehrere aufeinander folgende Fördereinrichtungen (21, 22, 23, 24, 30) vorgesehen sind, wobei die in Förderrichtung ersten Fördereinrichtungen (21) die zugeführten, aufeinander folgenden Platten (P) ergreifen und weiterfördern, und wobei die in Förderrichtung nachfolgenden Fördereinrichtungen (22, 23, 24) die einzelnen streifenförmigen Gegenstände (S) von den Platten (P) abtrennen und die abgetrennten einzelnen streifenförmigen Gegenstände (S) ergreifen und weiterfördern, wobei die Fördergeschwindigkeiten einzelner oder aller der aufeinander folgenden Fördereinrichtungen (21, 22, 23, 24) derart individuell steuerbar sind, dass die einzelnen abgetrennten, aufeinander folgenden streifenförmigen Gegenstände (S) für eine anschließende weitere Förderung der gebildeten streifenförmigen Gegenstände (S) in Förderrichtung den definierten Abstand voneinander aufweisen.

2. Verfahren nach Anspruch 1, **dadurch gekennzeichnet, dass** der Schritt des Bildens der einzelnen streifenförmigen Gegenstände (S) folgenden weiteren Schritt umfasst:
- Regeln von Antriebseinrichtungen der Fördereinrichtungen (21, 22, 23, 24) mittels der von Sensoreinrichtungen (40) erfassten tatsächlichen Position jedes einzelnen streifenförmigen Gegenstands (S) in Förderrichtung während des Abtrennens der streifenförmigen Gegenstände (S), so dass die Position der einzelnen abgetrennten streifenförmigen Gegenstände (S) korrigiert wird, wenn die erfasste tatsächliche Position des streifenförmigen Gegenstands (S) nicht der zu dem definierten Abstand zwischen den einzelnen aufeinander folgenden streifenförmigen Gegenständen (S) passenden Position entspricht.

3. Verfahren nach einem der Ansprüche 1 oder 2, **dadurch gekennzeichnet, dass** der Schritt des Zuführens der Platten (P) zu dem Schritt des Bildens der einzelnen streifenförmigen Gegenstände (S) aus den Platten (P) ein Fördern der einzelnen Platten (P) in ihrer Längsrichtung nacheinander derart umfasst, dass jede Platte (P) im wesentlichen positionsgenau, lückenlos und ohne Staudruck an die jeweils vorhergehende Platte (P) anschließt.

4. Verfahren nach Anspruch 3, **dadurch gekennzeichnet, dass** der Schritt des Zuführens der Platten (P) folgende weitere Schritte umfasst:
- Erfassen einer tatsächlichen Position jeder Platte (P) in Förderrichtung; und
- Korrigieren der Position der einzelnen Platten (P) in Förderrichtung, wenn die erfasste tatsächliche Position der Platte (P) nicht einer definierten Position derart entspricht, dass die aufeinander folgenden Platten (P) im wesentlichen ohne Lücken (L) zwischen ihnen zu dem nachfolgenden Schritt des Bildens der einzelnen streifenförmigen Gegenstände (S) zugeführt werden.

5. Verfahren nach Anspruch 4, **dadurch gekennzeichnet, dass** der Schritt des Zuführens der Platten (P) folgenden weiteren Schritt umfasst:
- Regeln von Antriebseinrichtungen für Fördereinrichtungen (10) zum Zuführen der Platten (P) mittels der von Sensoreinrichtungen (16) erfassten tatsächlichen Position der einzelnen Platten (P) in Förderrichtung im Bereich der Fördereinrichtungen (10), so dass die Position der einzelnen Platten (P) in Förderrichtung so korrigiert wird, dass keine Lücken (L) zwischen den aufeinander folgenden Platten (P) bestehen, wenn die erfasste tatsächliche Position einer Platte (P) nicht der definierten Position entspricht.

6. Vorrichtung zum Herstellen einzelner streifenförmiger Gegenstände (S), insbesondere zum Verzehr geeigneter Gegenstände, insbesondere Kaugummistreifen, mit folgenden Merkmalen:
- Einrichtungen (10) zum Zuführen von im wesentlichen rechteckigen Platten (P), aus denen die streifenförmigen Gegenstände (S) zu bilden sind, wobei die Länge der kürzeren Seiten der Platten (P) im wesentlichen der Länge eines zu bildenden streifenförmigen Gegenstands (S) entspricht, und wobei im wesentlichen parallel zu den kürzeren Seiten der Platten (P) mehrere parallel zueinander verlaufende Rillen (R) unter gleichen Abständen in den Platten (P) angeordnet sind, wobei der Abstand zwischen jeweils zwei nebeneinander angeordneten Rillen (R) der Breite eines zu bildenden streifenförmigen Gegenstands (S) entspricht; und
- Einrichtungen (20) zum Bilden einzelner streifenförmiger Gegenstände (S) aus den in ihrer Längsrichtung einzeln aufeinander folgend zugeführten Platten (P), wobei diese Einrichtungen folgende Merkmale aufweisen:
- Einrichtungen (21, 22, 23, 24) zum Abtrennen jeweils eines einzelnen streifenförmigen Gegenstands (S) von der Platte (P) an ihrem in Förderrichtung vorderen Ende entlang der jeweils vordersten Rille (R); und
- Einrichtungen (30) zum Bilden eines definierten Abstands zwischen den einzelnen aufeinander folgenden abgetrennten streifenförmigen Gegenständen (S) in Förderrichtung am Ausgang der Streifenherstellungsvorrichtung;
**dadurch gekennzeichnet, dass** die Einrichtungen (20) zum Bilden der einzelnen streifenförmigen Gegenstände (S) folgende weitere Merkmale aufweisen:
- Einrichtungen (40) zum Erfassen einer tatsächlichen Position jedes einzelnen abgetrennten streifenförmigen Gegenstands (S) in Förderrichtung im Bereich der Abtrenneinrichtungen (21, 22, 23, 24);
- Einrichtungen zum Korrigieren der Position der einzelnen abgetrennten streifenförmigen Gegenstände (S) in Förderrichtung, wenn die erfasste tatsächliche Position des streifenförmigen Gegenstands (S) nicht einer Position entspricht, die zu dem definierten Abstand zwischen den einzelnen aufeinander folgenden streifenförmigen Gegenständen (S) am Ausgang der Streifenherstellungsvorrichtung passt; und
- mehrere aufeinander folgende Fördereinrichtungen (21, 22, 23, 24, 30), wobei die in Förderrichtung ersten Fördereinrichtungen (21) die zugeführten, aufeinander folgenden Platten (P) ergreifen und weiterfördern, und wobei die in Förderrichtung nachfolgenden Fördereinrichtungen (22, 23, 24) die einzelnen streifenförmigen Gegenstände (S) von den Platten (P) abtrennen und die abgetrennten einzelnen streifenförmigen Gegenstände (S) ergreifen und weiterfördern, wobei die Fördergeschwindigkeiten einzelner oder aller der aufeinander folgenden Fördereinrichtungen (21, 22, 23, 24) derart individuell steuerbar sind, dass die einzelnen abgetrennten, aufeinander folgenden streifenförmigen Gegenstände (S) am Ausgang der Streifenherstellungsvorrichtung in Förderrichtung den definierten Abstand voneinander aufweisen.

7. Vorrichtung nach Anspruch 6, **dadurch gekennzeichnet, dass** die Fördereinrichtungen mehrere drehbare, parallel zueinander angeordnete Walzenpaare (21, 22, 23, 24) aufweisen, die in Förderrichtung hintereinander angeordnet sind, wobei die Fördergeschwindigkeit der aufeinander folgenden Walzenpaare (21, 22, 23, 24) in Förderrichtung im wesentlichen zunimmt, wobei das in Förderrichtung erste Walzenpaar (21) die zugeführte Platte (P) zwischen sich ergreift, und wobei die nachfolgenden Walzenpaare (22, 23, 24) den streifenförmigen Gegenstand (S) von der Platte (P) abtrennen.

8. Vorrichtung nach Anspruch 7, **dadurch gekennzeichnet, dass** die Fördereinrichtungen eine sternförmige Fördereinrichtung (30) aufweisen, die in Förderrichtung hinter den mehreren Walzenpaaren (21, 22, 23, 24) angeordnet ist, wobei die sternförmige Fördereinrichtung (30) um eine Achse rotiert, die parallel zu den Rotationsachsen der Walzenpaare (21, 22, 23, 24) angeordnet ist, und wobei die sternförmige Fördereinrichtung (30) den abgetrennten streifenförmigen Gegenstand (S) ergreift und in Förderrichtung weiterfördert.

9. Vorrichtung nach einem der Ansprüche 6, 7 oder 8, **dadurch gekennzeichnet, dass** die einzelnen Fördereinrichtungen (21, 22, 23, 24) oder Gruppen der Fördereinrichtungen (21, 22, 23, 24) jeweils eigene Antriebseinrichtungen aufweisen, die individuell regelbar sind, und dass Sensoreinrichtungen (40) zum Erfassen der tatsächlichen Position jedes einzelnen abgetrennten streifenförmigen Gegenstands (S) in Förderrichtung im Bereich der Fördereinrichtungen (21, 22, 23, 24) angeordnet sind, wobei die Sensoreinrichtungen (40) derart mit den einzelnen Antriebseinrichtungen zusammenarbeiten, dass die Antriebseinrichtungen derart geregelt werden, dass die Position der einzelnen abgetrennten streifenförmigen Gegenstände (S) in Förderrichtung korrigiert wird, wenn die erfasste tatsächliche Position des streifenförmigen Gegenstands (S) nicht einer Position entspricht, die zu dem definierten Abstand zwischen den einzelnen aufeinander folgenden streifenförmigen Gegenständen (S) am Ausgang der Streifenherstellungsvorrichtung passt.

10. Vorrichtung nach Anspruch 9 in Abhängigkeit von einem der Ansprüche 7 oder 8, **dadurch gekennzeichnet, dass** die einzelnen Walzenpaare (21, 22, 23, 24) individuell regelbare Antriebseinrichtungen aufweisen, und dass die Sensoreinrichtungen (40) zum Erfassen der tatsächlichen Position jedes einzelnen abgetrennten streifenförmigen Gegenstands (S) im Bereich der Walzenpaare (21, 22, 23, 24) angeordnet sind.

11. Vorrichtung nach einem der Ansprüche 7 bis 10, **dadurch gekennzeichnet, dass** die Fördergeschwindigkeit des in Förderrichtung ersten Walzenpaars (21) im wesentlichen der Geschwindigkeit der Zuführung der Platte (P) entspricht, und dass der definierte Abstand zwischen den einzelnen aufeinander folgenden streifenförmigen Gegenständen (S) am Ausgang der Streifenherstellungsvorrichtung im wesentlichen einem Abstand zwischen einzelnen aufeinander folgenden Fördermitteln (50, 52) entspricht, die die einzelnen streifenförmigen Gegenstände (S) im Anschluss an die Streifenherstellungsvorrichtung übernehmen und weiterfördern.

12. Vorrichtung nach einem der Ansprüche 7 bis 11, **dadurch gekennzeichnet, dass** vier Walzenpaare (21, 22, 23, 24) in Förderrichtung hintereinander angeordnet sind.

13. Vorrichtung nach einem der Ansprüche 6 bis 12, **dadurch gekennzeichnet, dass** die Einrichtungen zum Zuführen der Platten (P) Fördereinrichtungen (10) aufweisen, die die einzelnen Platten (P) in ihrer Längsrichtung nacheinander zu den nachfolgenden Einrichtungen (20) zum Bilden der einzelnen streifenförmigen Gegenstände (S) derart zuführen, dass jede Platte (P) im wesentlichen positionsgenau, lückenlos und ohne Staudruck an die jeweils vorhergehende Platte (P) anschließt.

14. Vorrichtung nach Anspruch 13, **dadurch gekennzeichnet, dass** die Fördereinrichtungen (10) Riementransporteinrichtungen und/oder Kettentransporteinrichtungen und/oder Mitnehmertransporteinrichtungen aufweisen.

15. Vorrichtung nach einem der Ansprüche 13 oder 14, **dadurch gekennzeichnet, dass** die Einrichtungen (10) zum Zuführen der Platten (P) folgende Merkmale aufweisen:
- Einrichtungen (16) zum Erfassen einer tatsächlichen Position jeder Platte (P) in Förderrichtung im Bereich der Fördereinrichtungen (10); und
- Einrichtungen zum Korrigieren der Position der einzelnen Platten (P) in Förderrichtung, wenn die erfasste tatsächliche Position der Platte (P) nicht einer definierten Position derart entspricht, dass die aufeinander folgenden Platten (P) im wesentlichen ohne Lücken (L) zwischen ihnen zu den nachfolgenden Einrichtungen (20) zum Bilden der einzelnen streifenförmigen Gegenstände (S) zugeführt werden.

16. Vorrichtung nach Anspruch 15, **dadurch gekennzeichnet, dass** die Fördereinrichtungen (10) der Einrichtungen zum Zuführen der Platten (P) individuell regelbare Antriebseinrichtungen aufweisen, und dass Sensoreinrichtungen (16) zum Erfassen der tatsächlichen Position der einzelnen Platten (P) in Förderrichtung im Bereich der Fördereinrichtungen (10) angeordnet sind, wobei die Sensoreinrichtungen (16) derart mit den Antriebseinrichtungen zusammenarbeiten, dass die Antriebseinrichtungen derart geregelt werden, dass die Position der einzelnen Platten (P) in Förderrichtung so korrigiert wird, dass keine Lücken (L) zwischen den aufeinander folgenden Platten (P) bestehen, wenn die erfasste tatsächliche Position einer Platte (P) nicht der definierten Position entspricht.

## Claims

1. A method for producing individual strip-shaped objects (S), in particular objects that are suitable for consumption, in particular sticks of chewing gum, said method having the following steps:
- supplying substantially rectangular sheets (P), from which the strip-shaped objects (S) are to be formed, wherein the length of the shorter sides of the sheets (P) corresponds substantially to the length of a strip-shaped object (S) to be formed, and wherein several grooves (R) which extend parallel to one another are arranged at identical spacings in the sheets (P) substantially parallel to the shorter sides of the sheets (P), wherein the spacing between two grooves (R) arranged side by side in each case corresponds to the width of a strip-shaped object (S) to be formed; and
- forming individual strip-shaped objects (S) from the sheets (P) which are supplied individually following one after another in their longitudinal direction, wherein this step includes the following steps:
- separating in each case an individual strip-shaped object (S) from the sheet (P) in each case at its front end in the conveying direction along the frontmost groove (R); and
- forming a defined spacing between the individual consecutive separated strip-shaped objects (S) in the conveying direction for a subsequent onward conveying of the formed strip-shaped objects (S);
**characterized in that** the step of forming the individual strip-shaped objects (S) includes the following further steps:
- detecting an actual position of each individual separated strip-shaped object (S) in the conveying direction during the separation of the strip-shaped objects (S) from the sheet (P); and
- correcting the position of the individual separated strip-shaped objects (S) in the conveying direction if the detected actual position of the strip-shaped object (S) does not correspond to a position which matches the defined spacing between the individual consecutive strip-shaped objects (S) for a subsequent onward conveying of the formed strip-shaped objects (S);
- wherein several consecutive conveying devices (21, 22, 23, 24, 30) are provided, wherein the first conveying devices (21) in the conveying direction grasp the supplied consecutive sheets (P) and convey them onward, and wherein the conveying devices (22, 23, 24) following in the conveying direction separate the individual strip-shaped objects (S) from the sheets (P) and grasp the separated individual strip-shaped objects (S) and convey them onward, wherein the conveying speeds of individual or of all of the consecutive conveying devices (21, 22, 23, 24) are controllable in such a manner individually that the individual separated, consecutive, strip-shaped objects (S) have the defined spacing from one another in the conveying direction for a subsequent onward conveying of the formed strip-shaped objects (S).

2. The method as claimed in claim 1, **characterized in that** the step of forming the individual strip-shaped objects (S) includes the following further step:
- adjusting driving devices of the conveying devices (21, 22, 23, 24) by means of the actual position of each individual strip-shaped object (S) detected by sensor devices (40) in the conveying direction during the separating of the strip-shaped objects (S) such that the position of the individual separated strip-shaped objects (S) is corrected if the actual position of the strip-shaped object (S) detected does not correspond to the position matching the defined distance between the individual consecutive strip-shaped objects (S).

3. The method as claimed in one of claims 1 or 2, **characterized in that** the step of supplying the sheets (P) to the step of forming the individual strip-shaped objects (S) out of the sheets (P) includes conveying the individual sheets (P) one after another in their longitudinal direction in such a manner that each sheet (P) follows the respective preceding sheet (P) in a manner that is substantially positionally precise, without any gaps and without dynamic pressure.

4. The method as claimed in claim 3, **characterized in that** the step of supplying the sheets (P) includes the following further steps:
- detecting an actual position of each sheet (P) in the conveying direction; and
- correcting the position of the individual sheets (P) in the conveying direction if the detected actual position of the sheet (P) does not correspond to a defined position in such a manner that the consecutive sheets (P) are supplied substantially without gaps (L) between them to the following step of the forming of the individual strip-shaped objects (S).

5. The method as claimed in claim 4, **characterized in that** the step of supplying the sheets (P) includes the following further step:
- adjusting driving devices for conveying devices (10) for supplying the sheets (P) by means of the actual position of the individual sheets (P) detected by sensor devices (16) in the conveying direction in the region of the conveying devices (10) such that the position of the individual sheets (P) in the conveying direction is corrected such that no gaps (L) exist between the consecutive sheets (P) if the actual position of a sheet (P) detected does not correspond to the defined position.

6. A device for producing individual strip-shaped objects (S), in particular objects suitable for consumption, in particular sticks of chewing gum, said device having the following features:
- devices (10) for supplying substantially rectangular sheets (P), from which the strip-shaped objects (S) are to be formed, wherein the length of the shorter sides of the sheets (P) corresponds substantially to the length of a strip-shaped object (S) to be formed, and wherein several grooves (R) which extend parallel to one another are arranged at identical spacings in the sheets (P) substantially parallel to the shorter sides of the sheets (P), wherein the spacing between two grooves (R) arranged side by side in each case corresponds to the width of a strip-shaped object (S) to be formed; and
- devices (20) for forming individual strip-shaped objects (S) out of the sheets (P) which are supplied individually consecutively in their longitudinal direction, wherein these devices comprise the following features:
- devices (21, 22, 23, 24) for separating in each case one individual strip-shaped object (S) from the sheet (P) at its front end in the conveying direction along the respectively frontmost groove (R); and
- devices (30) for forming a defined spacing between the individual consecutive separated strip-shaped objects (S) in the conveying direction at the outlet of the strip producing device;
**characterized in that** the devices (20) for forming the individual strip-shaped objects (S) comprise the following further features:
- devices (40) for detecting an actual position of each individual separated strip-shaped object (S) in the conveying direction in the region of the separating devices (21, 22, 23, 24) ;
- devices for correcting the position of the individual separated strip-shaped objects (S) in the conveying direction if the detected actual position of the strip-shaped object (S) does not correspond to a position which matches the defined spacing between the individual consecutive strip-shaped objects (S) at the outlet of the strip producing device; and
- several consecutive conveying devices (21, 22, 23, 24, 30), wherein the first conveying devices (21) in the conveying direction grasp the supplied consecutive sheets (P) and convey them onward, and wherein the conveying devices (22, 23, 24) following in the conveying direction separate the individual strip-shaped objects (S) from the sheets (P) and grasp the separated individual strip-shaped objects (S) and convey them onward, wherein the conveying speeds of individual or of all of the consecutive conveying devices (21, 22, 23, 24) are controllable in such a manner individually that the individual separated, consecutive, strip-shaped objects (S) are at the defined spacing from one another in the conveying direction at the outlet of the strip producing device.

7. The device as claimed in claim 6, **characterized in that** the conveying devices comprise several rotatable roller pairs (21, 22, 23, 24) which are arranged parallel to one another and are arranged one behind another in the conveying direction, wherein the conveying speed of the consecutive roller pairs (21, 22, 23, 24) substantially increases in the conveying direction, wherein the first roller pair (21) in the conveying direction grasp the supplied sheet (P) between them, and wherein the following roller pairs (22, 23, 24) separate the strip-shaped object (S) from the sheet (P).

8. The device as claimed in claim 7, **characterized in that** the conveying devices comprise a star-shaped conveying device (30) which is arranged behind the several roller pairs (21, 22, 23, 24) in the conveying direction, wherein the star-shaped conveying device (30) rotates about an axis which is arranged parallel to the rotational axes of the roller pairs (21, 22, 23, 24), and wherein the star-shaped conveying device (30) grasps the separated strip-shaped object (S) and conveys it onward in the conveying direction.

9. The device as claimed in one of claims 6, 7 or 8, **characterized in that** the individual conveying devices (21, 22, 23, 24) or groups of conveying devices (21, 22, 23, 24) in each case comprise own driving devices which are individually adjustable, and **in that** sensor devices (40) for detecting the actual position of each individual separated strip-shaped object (S) in the conveying direction are arranged in the region of the conveying devices (21, 22, 23, 24), wherein the sensor devices (40) interact in such a manner with the individual driving devices that the driving devices are adjusted in such a manner that the position of the individual separated strip-shaped objects (S) in the conveying direction is corrected if the detected actual position of the strip-shaped object (S) does not correspond to a position which matches the defined spacing between the individual consecutive strip-shaped objects (S) at the outlet of the strip producing device.

10. The device as claimed in claim 9 when depending on one of claims 7 or 8, **characterized in that** the individual roller pairs (21, 22, 23, 24) comprise individually adjustable driving devices, and **in that** the sensor devices (40) for detecting the actual position of each individual separated strip-shaped object (S) are arranged in the region of the roller pairs (21, 22, 23, 24).

11. The device as claimed in one of claims 7 to 10, **characterized in that** the conveying speed of the first roller pair (21) in the conveying direction corresponds substantially to the speed of the supplying of the sheet (P), and **in that** the defined spacing between the individual consecutive strip-shaped objects (S) at the outlet of the strip producing device corresponds substantially to a spacing between individual consecutive conveying means (50, 52) which take over the individual strip-shaped objects (S) following the strip producing device and convey them onward.

12. The device as claimed in one of claims 7 to 11, **characterized in that** four roller pairs (21, 22, 23, 24) are arranged one behind the other in the conveying direction.

13. The device as claimed in one of claims 6 to 12, **characterized in that** the devices for supplying the sheets (P) comprise conveying devices (10) which supply the individual sheets (P) in their longitudinal direction one after another to the following devices (20) for forming the individual strip-shaped objects (S) in such a manner that each sheet (P) follows the respective preceding sheet (P) in a substantially positionally precise, gap-free manner without any dynamic pressure.

14. The device as claimed in claim 13, **characterized in that** the conveying devices (10) comprise belt transporting devices and/or chain transporting devices and/or entrainment transporting devices.

15. The device as claimed in one of claims 13 or 14, **characterized in that** the devices (10) for supplying the sheets (P) comprise the following features:
- devices (16) for detecting an actual position of each sheet (P) in the conveying direction in the region of the conveying devices (10);
and
- devices for correcting the position of the individual sheets (P) in the conveying direction if the detected actual position of the sheet (P) does not correspond to a defined position in such a manner that the consecutive sheets (P) are supplied substantially without gaps (L) between them to the following devices (20) for forming the individual strip-shaped objects (S).

16. The device as claimed in claim 15, **characterized in that** the conveying devices (10) of the devices for supplying the sheets (P) comprise individually adjustable driving devices, and **in that** sensor devices (16) for detecting the actual position of the individual sheets (P) in the conveying direction are arranged in the region of the conveying devices (10), wherein the sensor devices (16) interact in such a manner with the driving devices that the driving devices are adjusted in such a manner that the position of the individual sheets (P) in the conveying direction is corrected such that no gaps (L) exist between the consecutive sheets (P) if the detected actual position of a sheet (P) does not correspond to the defined position.

## Revendications

1. Procédé de fabrication de différents objets en forme de bandes (S), plus particulièrement pour des objets destinés à l'alimentation, plus particulièrement des bandes de gomme à mâcher, avec les étapes suivantes :
- introduction de plaques globalement rectangulaires (P), à partir desquelles les objets en forme de bandes (S) doivent être formés, la longueur des côtés les plus courts des plaques (P) correspondant globalement à la longueur d'un objet en forme de bande (S) à former et, globalement parallèlement aux côtés les plus courts des plaques (P), plusieurs rainures (R) parallèles entre elles se trouvant à intervalles réguliers dans les plaques (P), la distance entre deux rainures (R) adjacentes correspondant à la largeur d'un objet en forme de bande (S) à former ; et
- formation de différents objets en forme de bandes (S) à partir des plaques (P) introduites séparément et successivement dans leur direction longitudinale, cette étape comprenant elle-même les étapes suivantes :
- séparation d'un objet en forme de bande (S) de la plaque (P) au niveau de son extrémité avant, dans le sens de convoyage, le long de la rainure (R) située la plus en avant ; et
- formation d'une distance définie entre les différents objets en forme de bandes (S) successifs séparés dans le sens de convoyage pour un convoyage supplémentaire ultérieur des objets en forme de bandes (S) formés ;
**caractérisé en ce que** l'étape de formation des différents objets en forme de bandes (S) comprend les étapes supplémentaires suivantes :
- détermination d'une position réelle de chaque objet en forme de bande (S) séparé dans le sens de convoyage pendant la séparation des objets en forme de bandes (S) de la plaque (P) ; et
- correction de la position des différents objets en forme de bandes (S) séparés dans le sens de convoyage, lorsque la position réelle déterminée de l'objet en forme de bande (S) ne correspond pas à une position adaptée à la distance définie entre les différents objets en forme de bandes (S) séparés successifs pour un convoyage supplémentaire ultérieur des objets en forme de bandes (S) formés ;
- plusieurs dispositifs de convoyage (21, 22, 23, 24, 30) successifs étant prévus, les premiers dispositifs de convoyage (21) dans le sens de convoyage saisissant et transportant les plaques (P) successives introduites et les dispositifs de convoyage suivants (22, 23, 24) dans le sens de convoyage séparant les différents objets en forme de bandes (S) des plaques (P) et saisissant et transportant les différents objets en forme de bandes (S) séparés, les vitesses de convoyage de certains ou de tous les dispositifs de convoyage successifs (21, 22, 23, 24) pouvant être contrôlées de manière individuelle de façon que les différents objets en forme de bandes (S) successifs séparés présentent entre eux, pour un convoyage supplémentaire ultérieur des objets de forme de bandes (S) formés, la distance définie dans le sens de convoyage.

2. Procédé selon la revendication 1, **caractérisé en ce que** l'étape de formation des différents objets en forme de bandes (S) comprend l'étape supplémentaire suivante :
- régulation de dispositifs d'entraînement des dispositifs de convoyage (21, 22, 23, 24) au moyen de la position réelle déterminée par des dispositifs de capteurs (40) de chaque objet en forme de bande (S) dans le sens de convoyage pendant la séparation des objets en forme de bandes (S), de façon que la position des différents objets en forme de bandes (S) séparés soit corrigée lorsque la position réelle déterminé de l'objet en forme de bande (S) ne correspond pas à la position correspondant à la distance définie entre les différents objets en forme de bandes (S) successifs.

3. Procédé selon l'une des revendications 1 ou 2, **caractérisé en ce que** l'étape d'introduction des plaques (P) vers l'étape de formation des différents objets en forme de bandes (S) à partir des plaques (P) comprend un convoyage des différentes plaques (P) successivement dans leur direction longitudinale, de façon que chaque plaque (P) suive, avec une certaine précision de position, sans interruption et sans bourrage, la plaque (P) respectivement précédente.

4. Procédé selon la revendication 3, **caractérisé en ce que** l'étape d'introduction des plaques (P) comprend les étapes supplémentaires suivantes :
- détermination d'une position réelle de chaque plaque (P) dans le sens de convoyage ; et
- correction de la position des différentes plaques (P) dans le sens de convoyage lorsque la position réelle déterminée de la plaque (P) ne correspond pas à une position définie de façon que les plaques successives (P) soient introduites globalement sans interruption (L) entre elles vers l'étape suivante de formation des différents objets en forme de bandes (S).

5. Procédé selon la revendication 4, **caractérisé en ce que** l'étape d'introduction des plaques (P) comprend l'étape supplémentaire suivante :
- régulation de dispositifs d'entraînement pour des dispositifs de convoyage (10) pour l'introduction des plaques (P) au moyen de la position réelle déterminée par des dispositifs de capteurs (16) des différentes plaques (P) dans le sens de convoyage au niveau des dispositifs de convoyage (10), de façon que la position des différentes plaques (P) dans le sens de convoyage soit corrigée, de sorte qu'aucune interruption (L) n'existe entre les plaques successives (P) lorsque la position réelle déterminée d'une plaque (P) ne correspond pas à la position définie.

6. Dispositif de fabrication de différents objets en forme de bandes (S), plus particulièrement d'objets destinés à l'alimentation, plus particulièrement de bandes de gomme à mâcher, avec les caractéristiques suivantes :
- des dispositifs (10) pour l'introduction de plaques globalement rectangulaires (P), à partir desquelles les objets en forme de bandes (S) doivent être formés, la longueur des côtés les plus courts des plaques (P) correspondant globalement à la longueur d'un objet en forme de bande (S) à former et, globalement parallèlement aux côtés les plus courts des plaques (P), plusieurs rainures (R) parallèles entre elles se trouvant à intervalles réguliers dans les plaques (P), la distance entre deux rainures (R) adjacentes correspondant à la largeur d'un objet en forme de bande (S) à former ; et
- des dispositifs (20) pour la formation de différents objets en forme de bandes (S) à partir des plaques (P) introduites séparément et successivement dans leur direction longitudinale, ces dispositifs présentant les caractéristiques suivantes :
- des dispositifs (21, 22, 23, 24) pour la séparation d'un objet en forme de bande (S) de la plaque (P) au niveau de son extrémité avant, dans le sens de convoyage, le long de la rainure (R) située la plus en avant ; et
- des dispositifs (30) pour la formation d'une distance définie entre les différents objets en forme de bandes (S) successifs séparés dans le sens de convoyage à la sortie du dispositif de fabrication de bandes ;
**caractérisé en ce que** les dispositifs (20), pour la formation des différents objets en forme de bandes (S), présentent les caractéristiques supplémentaires suivantes :
- des dispositifs (40) pour la détermination de la position réelle de chaque objet en forme de bande (S) séparés dans le sens de convoyage au niveau des dispositifs de séparation (21, 22, 23, 24) ;
- des dispositifs pour la correction de la position des différents objets en forme de bandes (S) séparés dans le sens de convoyage lorsque la position réelle déterminé de l'objet en forme de bande (S) ne correspond pas à une position qui correspond à la distance définie entre les différents objets en forme de bandes (S) successifs à la sortie du dispositif de fabrication de bandes ; et
- plusieurs dispositifs de convoyage successifs (21, 22, 23, 24, 30), les premiers dispositifs de convoyage (21) dans le sens de convoyage saisissant et transportant les plaques (P) successives introduites et les dispositifs de convoyage suivants (22, 23, 24) dans le sens de convoyage séparant les différents objets en forme de bandes (S) des plaques (P) et saisissant et transportant les différents objets en forme de bandes (S) séparés, les vitesses de convoyage de certains ou de tous les dispositifs de convoyage (21, 22, 23, 24) successifs pouvant être contrôlées de manière individuelle de façon que les différents objets en forme de bandes (S) successifs séparés présentent entre eux, à la sortie du dispositif de fabrication de bandes, dans le sens de convoyage, la distance définie.

7. Dispositif selon la revendication 6, **caractérisé en ce que** les dispositifs de convoyage comprennent plusieurs paires de rouleaux tournants (21, 22, 23, 24) disposées parallèlement entre elles qui sont disposées les unes derrière les autres dans le sens de convoyage, la vitesse de convoyage des paires de rouleaux successifs (21, 22, 23, 24) dans le sens de convoyage augmentant globalement, la première paire de rouleaux (21) dans le sens de convoyage saisissant la plaque (P) introduite entre elle et la paire de rouleaux suivante (22, 23, 24) séparant l'objet en forme de bande (S) de la plaque (P).

8. Dispositif selon la revendication 7, **caractérisé en ce que** les dispositifs de convoyage comprennent un dispositif de convoyage en forme d'étoile (30) qui est disposé dans le sens de convoyage derrière les plusieurs paires de rouleaux (21, 22, 23, 24), le dispositif de convoyage en forme d'étoile (30) tournant autour d'un axe qui est disposé parallèlement aux axes de rotation des paires de rouleaux (21, 22, 23, 24) et le dispositif de convoyage en forme d'étoile (30) saisissant l'objet en forme de bande (S) séparé et le transportant dans le sens de convoyage.

9. Dispositif selon l'une des revendications 6, 7 ou 8, **caractérisé en ce que** les différents dispositifs de convoyage (21, 22, 23, 24) ou groupes de dispositifs de convoyage (21, 22, 23, 24) comprennent chacun leurs propres dispositifs d'entraînement qui peuvent être régulés individuellement, et **en ce que** les dispositifs de capteurs (40) pour la détermination de la position réelle de chaque objet en forme de bande (S) séparé dans le sens de convoyage sont disposés au niveau des dispositifs de convoyage (21, 22, 23, 24), les dispositifs de capteurs (40) interagissant avec les différents dispositifs d'entraînement de façon que les dispositifs d'entraînement soient régulés de façon que la position des différents objets en forme de bandes (S) séparés dans le sens de convoyage soit corrigée lorsque la position réelle déterminée de l'objet en forme de bande (S) ne correspond pas à une position qui correspond à la distance définie entre les différents objets en forme de bandes (S) successifs à la sortie du dispositif de fabrication de bandes.

10. Dispositif selon la revendication 9 en dépendance d'une des revendications 7 ou 8, **caractérisé en ce que** les différentes paires de rouleaux (21, 22, 23, 24) comprennent des dispositifs d'entraînement pouvant être régulés individuellement et **en ce que** les dispositifs de capteurs (40) pour la détermination de la position réelle de chaque objet en forme de bande (S) séparé sont disposés au niveau des paires de rouleaux (21, 22, 23, 24).

11. Dispositif selon l'une des revendications 7 à 10, **caractérisé en ce que** la vitesse de convoyage de la première paire de rouleaux (21) dans le sens de convoyage correspond globalement à la vitesse d'introduction de la plaque (P) et **en ce que** la distance définie entre les différents objets en forme de bandes (S) successifs à la sortie du dispositif de fabrication de bandes correspond globalement à une distance entre différents moyens de convoyage (50, 52) successifs qui prennent en charge les différents objets en forme de bandes (S) après le dispositif de fabrication de bandes et les transportent plus loin.

12. Dispositif selon l'une des revendications 7 à 11, **caractérisé en ce que** quatre paires de rouleaux (21, 22, 23, 24) sont disposées les unes derrière les autres dans le sens de convoyage.

13. Dispositif selon l'une des revendications 6 à 12, **caractérisé en ce que** les dispositifs d'introduction des plaques (P) comprennent des dispositifs de convoyage (10) qui introduisent les différentes plaques (P) dans leur direction longitudinale les unes après les autres dans les différents dispositifs (20) pour la formation des différents objets en forme de bandes (S) de façon que chaque plaque (P) succède, avec une certaine précision de position, sans interruption et sans bourrage, à la plaque précédente (P).

14. Dispositif selon la revendication 13, **caractérisé en ce que** les dispositifs de convoyage (10) comprennent des dispositifs de transport à courroies et/ou des dispositifs de transport à chaînes et/ou des dispositifs de transport à entraîneurs.

15. Dispositif selon l'une des revendications 13 ou 14, **caractérisé en ce que** les dispositifs (10) pour l'introduction des plaques (P) présentent les caractéristiques suivantes :
- des dispositifs (16) pour la détermination d'une position réelle de chaque plaque (P) dans le sens de convoyage au niveau des dispositif de convoyage (10) ; et
- des dispositifs pour la correction de la position des différentes plaques (P) dans le sens de convoyage lorsque la position réelle déterminée de la plaque (P) ne correspond pas à une position définie, de façon que les plaques (P) successives soient introduites globalement sans interruption (L) entre elles dans les dispositifs (20) suivants pour la formation des différents objets en forme de bandes (S).

16. Dispositif selon la revendication 15, **caractérisé en ce que** les dispositifs de convoyage (10) des dispositifs pour l'introduction des plaques (P) comprennent des dispositifs d'entraînement pouvant être régulés individuellement et **en ce que** les dispositifs de capteurs (16) pour la détermination de la position réelle des différentes plaques (P) dans le sens de convoyage sont disposés au niveau des dispositifs de convoyage (10), les dispositifs de capteurs (16) interagissant avec les dispositifs d'entraînement de façon que les dispositifs d'entraînement soient régulés de façon que la position des différentes plaques (P) dans le sens de convoyage soit corrigée de façon qu'aucune interruption (L) n'existe entre les plaques (P) successives lorsque la position réelle déterminé d'une plaque (P) ne correspond pas à la position définie.
